# EUROPEAN PATENT SPECIFICATION

(11) **EP 3 825 618 B1**
(45) Date of publication and mention of the grant of the patent: **17.09.2025**
(21) Application number: 20208679.9
(22) Date of filing: 19.11.2020
(51) Int. Cl.: F24F 12/00, F24F 13/20, F24F 13/22, F24F 13/24

(54) **AIR CONDITIONER**
KLIMAANLAGE
CLIMATISEUR

(30) Priority: 20.11.2019 FI 20195992
(43) Date of publication of application: 26.05.2021
(73) Proprietor: Parmair ilmanvaihto Oy, 30100 Forssa (FI)
(72) Inventor: KANTELUS, Marko, 31340 Porras (FI)
(74) Representative: Genip Oy

(56) References cited:
- WO-A1-2008/090724
- WO-A1-94/20798
- CN-A- 109 838 869
- GB-A- 2 561 989
- KR-A- 20070 019 279
- US-A1- 2018 080 680

## Description

The invention relates to an air conditioner.

In buildings intended for residential use in cool and cold regions of the globe are currently commonly used air conditioners provided with heat recovery, by means of which fresh air is supplied into an apartment and exhaust air is correspondingly discharged from the apartment, while at the same time transferring the thermal energy contained in the heated indoor air to be discharged back to the fresh air supplied indoors. This has a significant positive effect on the energy efficiency of the building as heated air and the energy contained by it are not directly discharged as waste heat. In practice, current energy regulations concerning construction require using a heat recovery device (HR-device) in air conditioning.

Air conditioners provided with heat recovery usually comprise at least two ducts, one for incoming air and another for discharged air, and a heat exchanger for transferring the thermal energy contained by these from one airflow to another, and the required fans.

There are various types of air conditioners depending on intended installation sites. Probably the most commonly sold type in the field is a so-called cabinet-mounted model, where the components of the device are located inside a standard-sized cabinet, that is, in Europe a cabinet with a 60*60 cm base area. Another alternative is a model installed on the ceiling between the drop ceiling and the actual ceiling, where it is preferable to achieve as low as possible an arrangement for the components. In this case, the device does not actually take up space and expensive square metres of living space since the normal living space remains available below the air conditioner. A lack of space is often a challenge in constructing apartment buildings or terraced houses. In these types of construction, air conditioners are most often located in the bathroom or toilet. In small apartments, the said spaces are small and the air conditioner often takes up a lot of space. In a toilet or bathroom, the ceiling often has to be dropped lower than the rest of the ceiling, precisely due to the air conditioning pipes and sound dampers. Above this drop ceiling would be a good position for an HR-device. A challenge has, however, been presented by the servicing of the device, which has with these HR-devices been carried out from the side, meaning that a service hatch must be reserved for the servicing on the bathroom wall, on the side of the apartment.

From the prior art is known EP 3018425A2 which discloses a ventilation device intended to be installed on a ceiling, which comprises a housing with a countercurrent heat exchanger, plus two systems, where each system comprises at least one inlet, one outlet, an air inlet chamber, an outlet chamber, and a ventilator with a motor, and where each system comprises at least the following connections: inlet, inlet chamber, countercurrent heat exchanger, outlet chamber, ventilator air inlet and outlet, and where there is a ventilator in connection with each ventilator air inlet, wherein the inlet chambers and the outlet chambers are made from at least parts of the housing, the countercurrent heat exchanger and a double-curved intermediate plate, where the intermediate plate has a ventilator air inlet and, connected to this, means of installation of a ventilator.

A prior art document US 2018/0080680 A1 discloses a ventilating device that includes a frame forming an outer contour, an airflow path formed by a flowing of air inside the frame, and a plurality of orifices configured to measure a static pressure in a chamber where the airflow path is located, wherein at least one orifice of the plurality of orifices is further configured to drain water out of the frame. In the present disclosure, the orifice for static pressure measurement is provided in the air supply path and/or the air discharge path at a position where the dew is dominantly accumulated, the drainage function and the function of measuring the static pressure may be realized simultaneously, reducing the cost and ensuring air tightness.

In connection with the above solutions should be noted that when the indoor air is significantly warmer than outdoor air, and especially if it is in addition discharged from the bathroom, the indoor air to be discharged contains a considerable amount of steamy water. When this warm and humid air meets cold surfaces cooled by the outdoor air in the heat exchanger, condensation begins to take place. The warm indoor air cools down and its capacity to hold steamy water diminishes, the water condensing on the surfaces of the heat exchanger. This condensation of the steam into water is as such desirable to some extent because it improves the efficiency of heat exchange. In the structure of the air conditioner must, however, be taken into account that the water must be discharged in one way or another, in practice into the sewer, and it must not be allowed into the structures of the house.

Furthermore, both the fresh inlet air and the discharged air to be used contain impurities, the migration of which is to be controlled. The inlet air contains various impurities, such as dust, air pollutants, pollen and the like which should not migrate indoors. Because of this, there should be a way of cleaning the air and various filters and air purifiers are available for this purpose. Furthermore, the air discharged from indoors may contain food and fat residues from cooking, other household dust and similar impurities. In long-term use, these tend to accumulate in the heat exchanger of an air conditioner, reducing its capacity and shortening the service life of the device, and thus it may also be necessary to filter the discharged air.

The purpose of the invention is to upgrade the prevalent prior art in the field by providing an air conditioner structure aiming for a long service life for the device through both device solutions and by arranging good serviceability of the air conditioner. The object is thus to achieve an air conditioner in which the problems of the prior art are minimised.

The object of the invention is to provide an air conditioner structure where the impact of human factors on the leaking of condensate water into the wrong place is minimised and which functions efficiently and reliably throughout the intended service interval.

A further object of the invention is to provide an air conditioner installable on the ceiling.

The objects of the invention are mainly achieved as disclosed in greater detail in independent claim 1 and in the other claims. The air conditioner according to the invention is configured to be inspected and serviced from below in such a way that:
- the water trough is fixedly coupled to the housing, and
- the air conditioner is configured to be inspected and serviced from below, thorough the service hatch so that the water trough does not have to be removed for ordinary service operations, the filters, the cross-counter-flow heat exchanger, the fans and the water trough, are arranged in the housing in such a way that the said parts are accessible through the compartment behind the service hatch..

Further features characteristic of the invention appear from the accompanying claims and from the following description of the embodiments shown in the Figures.

Specific advantages of the invention are its good serviceability and reliability. A fixedly coupled water trough provides a leakproof structure since the water trough cannot move or be left in an incorrect position after service operations. The condensate water or the flow of water caused by ice formed on the cross-counter-flow heat exchanger in freezing conditions and the thawing/melting of ice always takes place in the desired manner. The structure also does not require the use of flexible tubes to remove the water from the water trough. The tubes used in some prior art solutions tend to become brittle during the years and their joints begin to loosen and leak. In the structure now presented, the water always flows in the planned manner.

A further advantage of the invention is good serviceability due to the service hatch on the lower surface of the housing which is arranged to open from below so that the fan of the fresh air duct and the fan of the exhaust air duct are in compartments behind the service hatch, and which compartments further allow easy access to the filters of the exhaust air duct and the fresh air duct. When in some solutions known from the prior art, which are intended for mounting on the bathroom ceiling, the service hatch has been on the side and the device has been arranged to be serviced in practice from the "living quarters" outside the bathroom, the arrangement may be considered as cumbersome and unaesthetic since the service hatch opens into the living quarters. Similarly, from the point of view of the sound insulation of the service hatch, the sound emitted by the fans is not considered to be a disadvantage in a bathroom where sounds are produced anyway by running water from a tap, using a hairdryer and other sound-producing devices. Even the slightest sounds carried through the service hatch into the actual living quarters, especially to the sleeping area, may be found disadvantageous.

The invention and its operation are described in the following with reference to the accompanying schematic drawings, in which
- Figure 1: shows schematically an embodiment of the principle of the HR-device's airflows,
- Figure 2: shows schematically an embodiment of the air conditioner according to the invention from outside,
- Figure 3: shows schematically an embodiment of the interior of the air conditioner according to the invention as seen from above,
- Figure 4: shows schematically an embodiment of the interior of the air conditioner according to the invention as seen from the side,
- Figure 5: shows schematically an embodiment of some of the components of the air conditioner according to the invention,
- Figure 6: shows schematically an embodiment of the air conditioner according to the invention as seen from below.

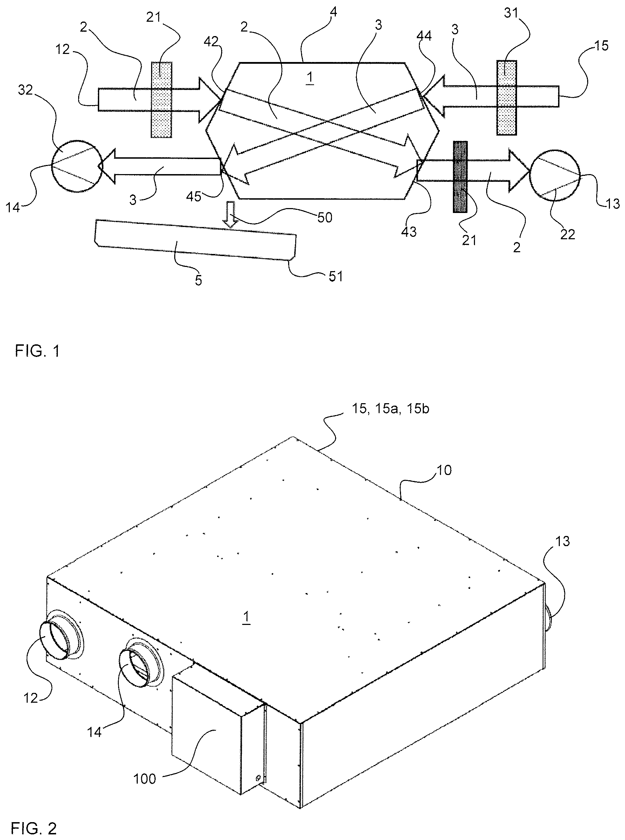

Figure 1 (FIG. 1) shows schematically an embodiment of the principle of the HR-device's 1 airflows, which is also applied in the air conditioner 1 according to the invention. The Figure shows an air conditioner 1 which is configured to be installed in a ceiling space, in the space between the drop ceiling and the actual ceiling, the air conditioner 1 comprising coupling units 12, 13, 14, 15 and a housing 10 (not shown in Figure 1), inside which is arranged:
- a fresh air duct 2 beginning from coupling unit 12 and ending in coupling unit 13 for conducting air from outdoors to indoors, and an exhaust air duct 3 beginning from coupling unit 15 and ending in coupling unit 14 for discharging air from indoors to outdoors,
- a static cross-counter-flow heat exchanger 4 for recovering heat from the air discharged from indoors and for transferring it to heat the air entering from outdoors,
- the cross-counter-flow heat exchanger 4 comprises the following flow-through openings: fresh air inlet 42, fresh air outlet 43, exhaust air inlet 44 and exhaust air outlet 45,
- air filters 21, 31 for filtering air into both of the said ducts 2, 3 to the upstream side 42, 44 before the cross-counter-flow heat exchanger 4, and
- motorised fans 22, 32 for generating airflow in both of the said ducts 2, 3 to the downstream side 43, 45 of the cross-counter-flow heat exchanger 4,
- below 45 the outlet of the exhaust air duct 3 of the cross-counter-flow heat exchanger 4 is arranged a water trough 5, into which the condensate water 50 accumulating due to the condensation of the moisture contained in the air discharged outdoors from indoors flows and can be further discharged out of the water trough 5 along a discharge pipe 51.

In the embodiment shown in Figure 1, the filters 21, 31 are arranged in the fresh air ducts 2 and exhaust air ducts 3 on the upstream side, before the cross-counter-flow heat exchanger 4 in the direction of flow, in order to keep the cross-counter-flow heat exchanger 4 as clean as possible and the service interval long. Similarly, the fans 22, 32 are not arranged until after the filters 21, 31, which means that the fans will circulate cleaned air and not dirty air which thus also lengthens the service life of these components.

The cross-counter-flow heat exchanger 4 comprises intermediate plates which are configured to separate from each other airflows intended to flow in opposite directions, the temperature difference between the airflows evening out on passing through the cross-counter-flow heat exchanger. In practice, the cross-counter-flow heat exchanger 4 is a static honeycomb inside which are arranged flow channels separated by intermediate plates, the wall surface area of the channels being large compared to the cross-sectional area. The directions of flow of the heating and heat-receiving fluids are mainly opposite, whereupon the heat transfer is more efficient than if the directions of flow were parallel. Figure 1 also shows a second air filter 21 located in the fresh air duct 2, after the cross-counter-flow air exchanger, the purpose of the filter being to prevent fine impurities from being transmitted indoors.

Figure 2 (FIG. 2) illustrates a three-dimensional view of the air conditioner 1, which is configured to be installed in the ceiling space, in the space between the drop ceiling and the actual ceiling, the air conditioner 1 comprising coupling units 12, 13, 14, (15, 15a, 15b not actually shown in Figure 2) and a housing 10. For the control and electrical connections required by the air conditioner 1 is arranged a switchbox 100. Figure 2 illustrates that, regarding its dimensions, the air conditioner intended for the said ceiling space is considerably low compared to its width or length as, according to one embodiment, the height of the air conditioner 1 is less than 1/3 of the greater width measurement of the air conditioner.

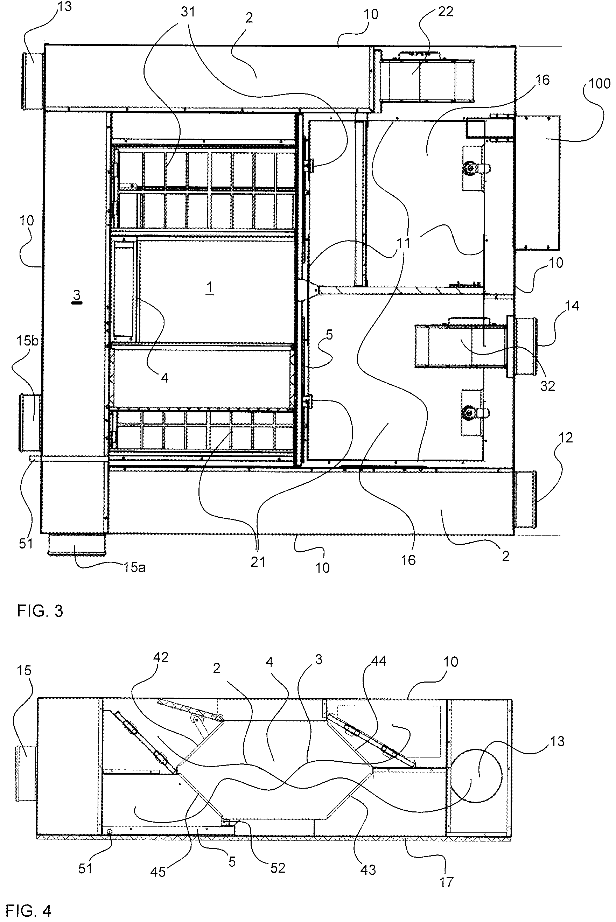

Figure 3 (FIG. 3) shows a top view of the interior of the air conditioner according to one embodiment of the invention. The air conditioner 1 comprises coupling units 12, 13, 14, (15), 15a, 15b and a housing 10, inside which is arranged:
- a fresh air duct 2 for conducting air from outdoors to indoors, and an exhaust air duct 3 for discharging air from indoors,
- a static cross-counter-flow heat exchanger 4 for recovering heat from the air discharged from indoors and for transferring it to heat the air entering from outdoors,
- air filters 21, 31 for filtering air into both of the said ducts 2, 3 to the upstream side before the cross-counter-flow heat exchanger 4, and
- motorised fans 22, 32 for generating airflow in both of the said ducts to the downstream side of the cross-counter-flow heat exchanger 4,
- the air conditioner 1 is configured to be inspected and serviced from below in such a way that:
   - on the lower surface of the housing 10 is a service hatch 11 (in Figure 3 the sides of the service hatch are indicated by reference numeral 11) which is arranged to open from below such that the fan 22 of the fresh air duct and the fan 32 of the exhaust air duct are in compartments 16 behind the service hatch 11 and from which compartments 16 the filters 21, 31 of the exhaust air 3 duct and the fresh air duct 2 are further accessible, as indicated in Figure 3 by the righthand side reference numeral lines of reference numerals 21 and 31, where the filters 21 and 31 can be pulled out of place in the direction of the compartments 16. The compartment 16 behind the service hatch 11 is preferably dimensioned so that the width of the compartment into which the air filters 21, 31 can be pulled when removed is greater than the length of the air filter 21, 31 in the same direction. The inspection and replacement of the filters is thus a simple and quick operation and will not be neglected on account of the inconvenience of the operation.

According to an embodiment shown in Figure 3, the surface area of the service hatch 11 is approximately 1/3 of the base area of the housing or larger. According to a further preferred embodiment, the dimensions of the service hatch 11 are such that the cross-counter-flow heat exchanger 4, or more specifically, the part forming the honeycomb of the heat exchanger, can be taken out of and brought into the housing 10 of the air conditioner 1 through the service hatch 11. The cross-counter-flow heat exchanger 4 is thus relatively simple to remove for cleaning without having to open up the ceiling panelling or other similar building-technical parts of a bathroom or the like. Serviceability is an extremely important factor relating to air conditioners since an air conditioner is in continuous use 24/7, that is, for 8760 hours in a year and the device is expected to function for several years, maybe even over a decade, during which time an enormous amount of air passes through the device even in providing air conditioning for a relatively small apartment. Easy and simple serviceability and reliability are thus particularly important factors.

According to the embodiment shown in Figure 3, the items that require regular inspection or service, such as the filters 21, 31, the cross-counter-flow heat exchanger 4, the fans 22, 32 and the water trough 5 intended for the condensate water 50, are arranged in the housing 10 of the air conditioner 1 in such a way that the said parts are accessible through the compartment 16 behind the service hatch 11. After opening the service hatch, the filters 21, 31 and fans 22, 32 can preferably be detached and attached without tools. According to one embodiment, the said parts are arranged in place by means of sealed sliding fits so that any operational vibration of the parts will not be transmitted as contact between hard surfaces to the housing 10 of the air conditioner 1. This characteristic has an effect on both serviceability and convenience of use as the components are easy to detach for service and, on the other hand, adverse resonance of the components is minimised since the components are not fixed to the housing or its structures by screw connections or other fixed, undamped connections which readily transmit sound and vibration. Following the same idea, the housing 10 and the air ducts 2, 3 and the compartments connected to them, such as the compartment 16 behind the service hatch, are further covered on their essential parts with sound-damping and heat-insulating material, such as cellular plastic, fibre matting or the like.

Figure 4 shows the cross-section of an air conditioner according to one embodiment at the cross-counter-flow heat exchanger 4. To the Figure can be directly applied the airflow directions shown in Figure 1; in Figure 4 they are illustrated by means of routes passing along the fresh air duct 2 and the exhaust air duct 3, showing the whirling movement of air. Of the external coupling units of the air conditioner are in this Figure 4 only shown the fresh air blowing coupling unit 13, as seen from inside the housing, and the exhaust air suction coupling unit 15. The cross-counter-flow heat exchanger 4 comprises the following flow-through openings: fresh air inlet 42, fresh air outlet 43, exhaust air inlet 44 and exhaust air outlet 45. As can be seen from Figure 4, the cross-counter-flow heat exchanger or its upper or lower edge are not completely in contact with the housing 10, but around it are formed by-pass ducts by means of which a potential freezing situation can be controlled. In other words, the actual honeycomb of the heat exchanger can be by-passed, if necessary, by means of by-pass ducts and the defrosting operation can be started.

Figure 4 also illustrates that inside the housing 10, below the outlet 45 of the exhaust air duct 3 of the cross-counter-flow heat exchanger 4, is arranged a water trough 5 fixedly coupled to the housing 10, into which trough the condensate water accumulating due to the condensation of the moisture contained in the air discharged outdoors from the indoors flows and can be further discharged from the water trough 5, along an outlet pipe 51, out of the housing 10. The fixedly coupled water trough shown in the Figure allows and provides a leakproof structure since the water trough cannot move during operation or be left in an incorrect position after service operations. Should the service hatch also open under the water trough 5, it would have to be made removable, which would in turn endanger the object and solution described above. In many cases, human factors seem to be the reason for the condensate water in prior art air conditioners ending up in the wrong place. The present solution eliminates this potential risk. The condensate water or the flow of water caused by ice formed on the cross-counter-flow heat exchanger in freezing conditions and the thawing/melting of ice always takes place in the desired manner when preferably between the lower edge of the outlet 45 of the exhaust air duct of the cross-counter-flow heat exchanger 4 and the water trough 5 for condensate water is arranged a guide 52 for conducting the water 50 condensing inside the cross-counter-flow heat exchanger 4 into the water trough 5. These guides may be drip tray type solutions or seals or their combinations. Furthermore, the structure of the fixedly coupled water trough 5 also does not require the use of flexible tubes for removing water from the water trough 5. In some prior art solutions, the tubes used tend to become brittle over the years, the connections loosen and the tubes or their connections begin to leak. With the present structure, the water always flows as planned.

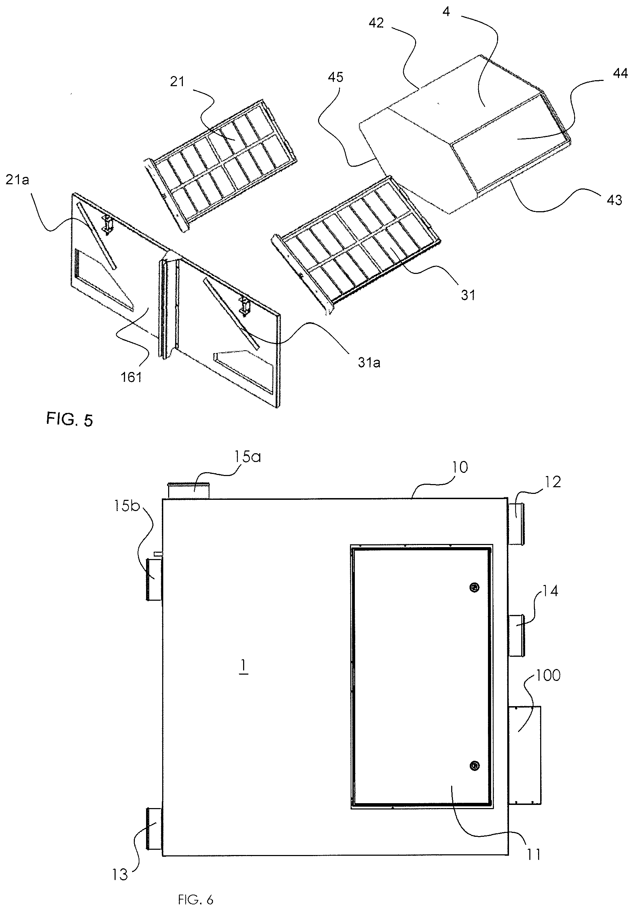

Figure 5 (FIG. 5) shows an embodiment of the cross-counter-flow heat exchanger 4 and of a filter for fresh air 21 and a filter for exhaust air 31 to be placed in front of its exhaust air inlet 44 and fresh air inlet 42 openings. The Figure also shows an embodiment of the dividing wall 161 of compartment 16, which acts both as an installation base for the filters 21, 31, the filters being configured to be pushed in place in/removed from the installation openings 21a, 21b of the filter. The dividing wall is also configured to act as a dividing wall in such a way that it also separates the airflows. This dividing wall 161 can preferably also be removed or opened without tools, which allows easy access to the cross-counter-flow heat exchanger 4.

Figure 6 shows yet another embodiment of the air conditioner 1 according to the invention, as seen from below. The Figure shows the housing 10 itself and the coupling units 12, 13, 14, 15a, 15, as well as the switchbox 100. The housing 10 further comprises a service hatch 11 shown on the lower surface in the Figure, the surface area of the service hatch being 1/3 of the base area of the housing 10 or larger. It is, moreover, preferable that the dimensions of the service hatch 11 are such that the cross-counter-flow heat exchanger 4 can be taken out of and brought into the housing 10 of the air conditioner 1 through the service hatch 11. On the other hand, the size of the service hatch should not be too large so that the water trough does not have to be made removable for ordinary service operations, in which case the previously mentioned advantages of a fixed water trough would be lost. The size of the service hatch is preferably at most 50% of the base area of the housing. At a typical installation site, where the air conditioner is installed in the ceiling space, in the space between the drop ceiling and the actual ceiling, the service hatch is visible downwards, but the rest of the housing is hidden from sight behind the panelling of the drop ceiling or the like.

It should be noted that in the foregoing are only disclosed some of the most preferred embodiments of the invention. It is thus obvious that the invention is not limited to the embodiments disclosed above but can be applied in various ways within the scope specified by the accompanying claims. The features described in connection with the different embodiments may also be used whithin the scope of the claims in connection with other embodiments and/or the features described may be combined into different entities if so desired and if the technical potential for doing so is available.

The reference numerals shown in the Figures:
- 1: air conditioner
- 10: housing
- 100: switchbox
- 11: service hatch
- 12: coupling unit, fresh air in
- 13: coupling unit, fresh air blowing
- 14: coupling unit, exhaust air out
- 15: coupling unit, exhaust air suction
- 15a: coupling unit, exhaust air suction, kitchen
- 15b: coupling unit, exhaust air suction, bathroom
- 16: housing compartment
- 161: compartment dividing wall
- 17: housing isolation
- 2: fresh air duct
- 21: filter for fresh air
- 21a: installation opening
- 22: fan for fresh air
- 3: exhaust air duct
- 31: filter for exhaust air
- 31a: installation opening
- 32: fan for exhaust air
- 4: cross-counter-flow heat exchanger
- 42: fresh air inlet
- 43: fresh air outlet
- 44: exhaust air inlet
- 45: exhaust air outlet
- 5: water trough
- 50: condensate water
- 51: water trough discharge pipe
- 52: guide for condensate water

## Claims

1. An air conditioner (1) configured to be installed in a ceiling space, in the space between a drop ceiling and the actual ceiling, the air conditioner (1) comprising coupling units (12, 13, 14, 15, 15a, 15b) and a housing (10), inside which is arranged:
- a fresh air duct (2) for conducting air from outdoors to indoors, and an exhaust air duct (3) for discharging air from indoors,
- a static cross-counter-flow heat exchanger (4) for recovering heat from the air discharged from indoors and for transferring it to heat the air entering from outdoors, the cross-counter-flow heat exchanger (4) comprises the following flow-through openings: fresh air inlet (42), fresh air outlet (43), exhaust air inlet (44) and exhaust air outlet (45),
- air filters (21, 31) for filtering air into both of the said ducts (2, 3) to the upstream side before the cross-counter-flow heat exchanger (4), and
- motorised fans (22, 32) for generating airflow in both of the said ducts (2, 3) to the downstream side of the cross-counter-flow heat exchanger (4),
- inside the housing (10), below the exhaust air outlet (45) of the cross-counter-flow heat exchanger (4), is arranged a water trough (5) for allowing condensate water (50) accumulating due to the condensation of the moisture contained in the air discharged outdoors from indoors to flow into said water trough (5), the water trough (5) comprise a discharge pipe (51) for discharging said condensate water from the water trough (5) out of the housing (10),
- on the lower side of the housing (10) is a service hatch (11) which is arranged to open from below such that the fan (22) of the fresh air duct and the fan (32) of the exhaust air duct are in compartments (16) behind the service hatch (10) and from which compartments (16) the filters (21, 31) of the exhaust air duct (3) and the fresh air duct (2) are further accessible,
wherein
- the water trough (5) is fixedly coupled to the housing (10), and
- the air conditioner (1) is configured to be inspected and serviced from below, through the service hatch (11) so that the water trough (5) does not have to be removed for ordinary service operations, the filters (21, 31), the cross-counter-flow heat exchanger (4), the fans (22, 32) and the water trough (5), are arranged in the housing (10) in such a way that the said parts are accessible through the compartment (16) behind the service hatch (11).

2. An air conditioner (1) according to claim 1, **characterised in that** items which require regular inspection or service, such as the filters (21, 31), the cross-counter-flow heat exchanger (4), the fans (22, 32) and the water trough (5) intended for the condensate water (50) are arranged in the housing (10) of the air conditioner (1) in such a way that the said parts are accessible from the compartments (16) behind the service hatch (11).

3. An air conditioner (1) according to claim 1 or 2, **characterised in that** the filters (21, 31) and the fans (22, 32) can be detached and attached without tools after the service hatch has been opened.

4. An air conditioner (1) according to claim 1 or any preceding claim, **characterised in that** between the lower edge of the exhaust air outlet (45) of the cross-counter-flow heat exchanger (4) and the water trough (5) for condensate water is arranged a guide (52) for guiding the water (50) condensing inside the cross-counter-flow heat exchanger (4) into the water trough (5).

5. An air conditioner (1) according to claim 1 or any preceding claim, **characterised in that** the surface area of the service hatch (11) is 1/3 of the base area of the housing (10) or larger.

6. An air conditioner (1) according to claim 5 or any preceding claim, **characterised in that** the dimensions of the service hatch (11) are such that the cross-counter-flow heat exchanger (4) can be taken out of and brought into the air conditioner (1) housing (10) through the service hatch (11).

7. An air conditioner (1) according to claim 1 or any preceding claim, **characterised in that** the compartments (16) behind the service hatch (11) are dimensioned so that the width of the compartments (16) into which the air filters (21, 31) can be pulled when removed is greater than the length of the filter (21, 31) in the same direction.

8. An air conditioner (1) according to claim 1 or any preceding claim, **characterised in that** the cross-counter-flow heat exchanger (4) comprises intermediate plates which are configured to separate from each other airflows intended to flow in opposite directions, such that the temperature difference between the airflows can even out on passing through the cross-counter-flow heat exchanger (4).

9. An air conditioner (1) according to claim 3 or any preceding claim, **characterised in that** said parts (21, 22, 31, 32) are arranged in place by means of sealed sliding fits such that any operational vibration of the parts will not be transmitted as contact between hard surfaces to the housing (10) of the air conditioner (1).

10. An air conditioner (1) according to claim 1 or any preceding claim, **characterised in that** the housing (10) and the air ducts (2, 3) are covered on their essential parts with sound-damping and heat-insulating material, such as cellular plastic or fibre matting.

11. An air conditioner (1) according to claim 1 or any preceding claim, **characterised in that** the height of the air conditioner (10) is less than 1/3 of the greater width measurement of the air conditioner (1).

## Patentansprüche

1. Klimaanlage (1), die eingerichtet ist, um in einem Deckenraum, in dem Raum zwischen einer abgehängten Decke und der eigentlichen Decke, installiert zu sein, wobei die Klimaanlage (1) Kopplungseinheiten (12, 13, 14, 15, 15a, 15b) und ein Gehäuse (10) umfasst, in dessen Inneren angeordnet ist:
- eine Frischluftleitung (2) zum Leiten von Luft aus einem Außenbereich in einen Innenbereich, und eine Abluftleitung (3) zum Ableiten von Luft aus einem Innenbereich,
- einen statischen Kreuz-/Gegenstrom-Wärmetauscher (4) zum Rückgewinnen von Wärme aus der Luft, die aus dem Innenbereich abgeleitet wird, und zum Übertragen von ihr zum Erwärmen der Luft, die aus dem Außenbereich eintritt, wobei der Kreuz-/Gegenstrom-Wärmetauscher (4) die folgenden Durchströmungsöffnungen umfasst: Frischlufteinlass (42), Frischluftauslass (43), Ablufteinlass (44) und Abluftauslass (45),
- Luftfilter (21, 31) zum Filtern von Luft in beide der Leitungen (2, 3) auf der stromaufwärts gelegenen Seite vor dem Kreuz-/Gegenstrom-Wärmetauscher (4), und
- motorisierte Ventilatoren (22, 32) zum Erzeugen eines Luftstroms in beiden der Leitungen (2, 3) zu der stromabwärts gelegenen Seite des Kreuz-/Gegenstrom-Wärmetauschers (4),
- wobei im Inneren des Gehäuses (10) unterhalb des Abluftauslasses (45) des Kreuz-/Gegenstrom-Wärmetauschers (4) eine Wasserwanne (5) angeordnet ist, um Kondenswasser (50), das sich aufgrund der Kondensation der Feuchtigkeit, die in der aus dem Innenbereich in den Außenbereich abgeleiteten Luft enthalten ist, ansammelt, in die Wasserwanne (5) strömen zu lassen, wobei die Wasserwanne (5) eine Abflussleitung (51) umfasst, um das Kondenswasser aus der Wasserwanne (5) aus dem Gehäuse (10) abzuleiten,
- wobei an der Unterseite des Gehäuses (10) eine Wartungsklappe (11) angeordnet ist, die angeordnet ist, um von unten geöffnet zu werden, so dass sich der Ventilator (22) der Frischluftleitung und der Ventilator (32) der Abluftleitung in Kammern (16) hinter der Wartungsklappe (10) befinden und wobei von den Kammern (16) die Filter (21, 31) der Abluftleitung (3) und der Frischluftleitung (2) weiter zugänglich sind,
wobei
- die Wasserwanne (5) fest mit dem Gehäuse (10) gekoppelt ist, und
- die Klimaanlage (1) eingerichtet ist, um von unten durch die Wartungsklappe (11) inspiziert und gewartet zu werden, so dass die Wasserwanne (5) für normale Wartungsarbeiten nicht entfernt werden muss, die Filter (21, 31), der Kreuz-/Gegenstrom-Wärmetauscher (4), die Ventilatoren (22, 32) und die Wasserwanne (5) derart in dem Gehäuse (10) angeordnet sind, dass die Teile durch die Kammer (16) hinter der Wartungsklappe (11) zugänglich sind.

2. Klimaanlage (1) nach Anspruch 1, **dadurch gekennzeichnet, dass** Gegenstände, die einer regelmäßigen Inspektion oder Wartung bedürfen, wie die Filter (21, 31), der Kreuz-/Gegenstrom-Wärmetauscher (4), die Ventilatoren (22, 32) und die Wasserwanne (5), die für das Kondenswasser (50) bestimmt ist, derart in dem Gehäuse (10) der Klimaanlage (1) angeordnet sind, dass die Teile von den Kammern (16) hinter der Wartungsklappe (11) zugänglich sind.

3. Klimaanlage (1) nach Anspruch 1 oder 2, **dadurch gekennzeichnet, dass** die Filter (21, 31) und die Ventilatoren (22, 32), nachdem die Wartungsklappe geöffnet wurde, ohne Werkzeug abgenommen und angebracht werden können.

4. Klimaanlage (1) nach Anspruch 1 oder nach einem der vorhergehenden Ansprüche, **dadurch gekennzeichnet, dass** zwischen der Unterkante des Abluftauslasses (45) des Kreuz-/Gegenstrom-Wärmetauschers (4) und der Wasserwanne (5) für Kondenswasser eine Führung (52) angeordnet ist, um das Wasser (50), das im Inneren des Kreuz-/Gegenstrom-Wärmetauschers (4) kondensiert, in die Wasserwanne (5) zu führen.

5. Klimaanlage (1) nach Anspruch 1 oder nach einem der vorhergehenden Ansprüche, **dadurch gekennzeichnet, dass** die Fläche der Wartungsklappe (11) 1/3 der Grundfläche des Gehäuses (10) oder mehr beträgt.

6. Klimaanlage (1) nach Anspruch 5 oder nach einem der vorhergehenden Ansprüche, **dadurch gekennzeichnet, dass** die Abmessungen der Wartungsklappe (11) so sind, dass der Kreuz-/Gegenstrom-Wärmetauscher (4) durch die Wartungsklappe (11) aus dem Gehäuse (10) der Klimaanlage (1) herausgenommen und in dieses eingebracht werden kann.

7. Klimaanlage (1) nach Anspruch 1 nach einem der vorhergehenden Ansprüche, **dadurch gekennzeichnet, dass** die Kammern (16) hinter der Wartungsklappe (11) so bemessen sind, dass die Breite der Kammern (16), in die die Luftfilter (21, 31) herausgezogen werden können, wenn sie entfernt werden, größer ist als die Länge des Filters (21, 31) in der gleichen Richtung.

8. Klimaanlage (1) nach Anspruch 1 oder nach einem der vorhergehenden Ansprüche, **dadurch gekennzeichnet, dass** der Kreuz-/Gegenstrom-Wärmetauscher (4) Zwischenplatten umfasst, die eingerichtet sind, um Luftströme, die in entgegengesetzten Richtungen strömen sollen, voneinander zu trennen, so dass sich der Temperaturunterschied zwischen den Luftströmen beim Durchströmen des Kreuz-/Gegenstrom-Wärmetauschers (4) ausgleichen kann.

9. Klimaanlage (1) nach Anspruch 3 oder nach einem der vorhergehenden Ansprüche, **dadurch gekennzeichnet, dass** die Teile (21, 22, 31, 32) mittels abgedichteter Gleitpassungen derart an ihrem Platz angeordnet sind, dass Betriebsvibrationen der Teile nicht als Kontakt zwischen harten Flächen auf das Gehäuse (10) der Klimaanlage (1) übertragen werden.

10. Klimaanlage (1) nach Anspruch 1 oder nach einem der vorhergehenden Ansprüche, **dadurch gekennzeichnet, dass** das Gehäuse (10) und die Luftleitungen (2, 3) an ihren wesentlichen Teilen mit schalldämpfendem und wärmeisolierendem Material, wie Schaumstoff oder Fasermatten, abgedeckt sind.

11. Klimaanlage (1) nach Anspruch 1 oder nach einem der vorhergehenden Ansprüche, **dadurch gekennzeichnet, dass** die Höhe der Klimaanlage (10) weniger als 1/3 der größten Breitenabmessung der Klimaanlage (1) beträgt.

## Revendications

1. Climatiseur (1) configuré pour être installé dans un espace de plafond, dans l'espace entre un faux plafond et le plafond lui-même, le climatiseur (1) comprenant des unités de couplage (12, 13, 14, 15, 15a, 15b) et un boîtier (10), à l'intérieur duquel sont agencés :
- un conduit d'air frais (2) pour conduire l'air de l'extérieur vers l'intérieur, et un conduit d'air évacué (3) pour évacuer l'air de l'intérieur,
- un échangeur de chaleur à contre-courant croisé statique (4) destiné à récupérer la chaleur de l'air qui est évacué de l'intérieur et à la transférer pour chauffer l'air entrant de l'extérieur, l'échangeur de chaleur à contre-courant croisé (4) comprenant les ouvertures de circulation suivantes : entrée d'air frais (42), sortie d'air frais (43), entrée d'air évacué (44) et sortie d'air évacué (45),
- des filtres à air (21, 31) pour filtrer l'air dans les deux dits conduits (2, 3) du côté amont de l'échangeur de chaleur à contre-courant croisé (4), et
- des ventilateurs motorisés (22, 32) pour générer un flux d'air dans les deux dits conduits (2, 3) du côté aval de l'échangeur de chaleur à contre-courant croisé (4),
- à l'intérieur du boîtier (10), sous la sortie d'air évacué (45) de l'échangeur de chaleur à contre-courant croisé (4), un bac d'eau (5) pour permettre à l'eau de condensation (50), accumulée en raison de la condensation de l'humidité contenue dans l'air évacué à l'extérieur depuis l'intérieur, de s'écouler dans ledit bac d'eau (5), le bac d'eau (5) comprenant un tuyau d'évacuation (51) pour évacuer ladite eau de condensation du bac d'eau (5) hors du boîtier (10),
- sur le côté inférieur du boîtier (10), une trappe de service (11) agencée pour s'ouvrir par le bas, de telle sorte que le ventilateur (22) du conduit d'air frais et le ventilateur (32) du conduit d'air évacué se trouvent dans des compartiments (16) situés derrière la trappe de service (10), et que les filtres (21, 31) du conduit d'air évacué (3) et du conduit d'air frais (2) soient en outre accessibles à partir desdits compartiments (16),
dans lequel
- le bac d'eau (5) est accouplé de manière fixe au boîtier (10), et
- le climatiseur (1) est configuré pour être inspecté et entretenu par le bas, à travers la trappe de service (11), de telle sorte que le bac d'eau (5) ne doive pas être retiré pour les opérations d'entretien ordinaires, les filtres (21, 31), l'échangeur de chaleur à contre-courant croisé (4), les ventilateurs (22, 32) et le bac d'eau (5) étant agencés dans le boîtier (10) de telle manière que lesdites pièces soient accessibles à travers le compartiment (16) derrière la trappe de service (11).

2. Climatiseur (1) selon la revendication 1, **caractérisé en ce que** les éléments qui nécessitent une inspection ou un entretien régulier, tels que les filtres (21, 31), l'échangeur de chaleur à contre-courant croisé (4), les ventilateurs (22, 32) et le bac d'eau (5) destiné à l'eau de condensation (50), sont agencés dans le boîtier (10) du climatiseur (1) de telle manière que lesdites pièces soient accessibles depuis les compartiments (16) situés derrière la trappe de service (11).

3. Climatiseur (1) selon la revendication 1 ou 2, **caractérisé en ce que** les filtres (21, 31) et les ventilateurs (22, 32) peuvent être détachés et attachés sans outils après ouverture de la trappe de service.

4. Climatiseur (1) selon la revendication 1 ou l'une quelconque des revendications précédentes, **caractérisé en ce qu'**entre le bord inférieur de la sortie d'air évacué (45) de l'échangeur de chaleur à contre-courant croisé (4) et le bac d'eau (5) pour l'eau de condensation, un guide (52) est agencé pour guider l'eau (50) qui se condense à l'intérieur de l'échangeur de chaleur à contre-courant croisé (4) dans le bac d'eau (5).

5. Climatiseur (1) selon la revendication 1 ou l'une quelconque des revendications précédentes, **caractérisé en ce que** la superficie de la trappe de service (11) est supérieure ou égale à 1/3 de la superficie de la base du boîtier (10).

6. Climatiseur (1) selon la revendication 5 ou l'une quelconque des revendications précédentes, **caractérisé en ce que** les dimensions de la trappe de service (11) sont telles que l'échangeur de chaleur à contre-courant croisé (4) peut être retiré et introduit dans le boîtier (10) du climatiseur (1) via la trappe de service (11).

7. Climatiseur (1) selon la revendication 1 ou l'une quelconque des revendications précédentes, **caractérisé en ce que** les compartiments (16) derrière la trappe de service (11) sont dimensionnés de telle sorte que la largeur des compartiments (16) dans lesquels les filtres à air (21, 31) puissent être tirés quand ils sont retirés est supérieure à la longueur du filtre (21, 31) dans la même direction.

8. Climatiseur (1) selon la revendication 1 ou l'une quelconque des revendications précédentes, **caractérisé en ce que** l'échangeur de chaleur à contre-courant croisé (4) comprend des plaques intermédiaires qui sont configurées pour séparer des flux d'air destinés à circuler dans des directions opposées, de telle sorte que la différence de température entre les flux d'air puisse s'égaliser lors du passage à travers l'échangeur de chaleur à contre-courant croisé (4).

9. Climatiseur (1) selon la revendication 3 ou l'une quelconque des revendications précédentes, **caractérisé en ce que** lesdites pièces (21, 22, 31, 32) sont agencées en place au moyen d'ajustements coulissants étanches de telle sorte qu'aucune vibration de fonctionnement des pièces ne soit transmise au boîtier (10) du climatiseur (1) par contact entre des surfaces dures.

10. Climatiseur (1) selon la revendication 1 ou l'une quelconque des revendications précédentes, **caractérisé en ce que** le boîtier (10) et les conduits d'air (2, 3) sont recouverts sur leurs pièces essentielles d'un matériau insonorisant et thermiquement isolant, tel qu'un plastique cellulaire ou une nappe de fibres.

11. Climatiseur (1) selon la revendication 1 ou l'une quelconque des revendications précédentes, **caractérisé en ce que** la hauteur du climatiseur (10) est inférieure à 1/3 de la plus grande mesure de largeur du climatiseur (1) .
